(19) Europäisches Patentamt / European Patent Office / Office européen des brevets

(11) **EP 2 986 069 A1**

(12) **EUROPEAN PATENT APPLICATION**

(43) Date of publication:
17.02.2016 Bulletin 2016/07

(51) Int Cl.:
*H04W 64/00* (2009.01)          *H04W 4/02* (2009.01)
*H04W 36/22* (2009.01)          *H04W 24/08* (2009.01)

(21) Application number: 14290251.9

(22) Date of filing: 15.08.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: ALCATEL LUCENT
92100 Boulogne-Billancourt (FR)

(72) Inventors:
• **Valentin, Stefan**
  **70435 Stuttgart (DE)**
• **Malanchini, Ilaria**
  **70435 Stuttgart (DE)**

(74) Representative: **DREISS Patentanwälte PartG mbB**
**Postfach 10 37 62**
**70032 Stuttgart (DE)**

(54) **Method of analysing information in a communication network and corresponding device**

(57)     Method, and respective device, of analysing information in a communication network (300), comprising receiving information indicative of a motion of a user equipment (100), determining at least one parameter indicative of a motion pattern depending on the received information, and determining information indicative of a presence of a group of user equipment depending on the at least one parameter.

The invention concerns a respective device (100, 200) as well.

**Fig. 3**

EP 2 986 069 A1

## Description

### Field of the invention

The invention concerns a method of analysing information in a communication network and a corresponding device.

### Background

Communication networks such as mobile networks are analysed for example to predict traffic load. It is of particular interest to detect large and dense crowds with aggregated traffic requests in relatively small areas. The denser a crowd is the more likely is it that the mobile network in its area is overloaded. This may lead to one highly congested cell serving the crowd, while cells in the neighbourhood are empty. Detecting crowds provides the network with the information to solve such local overload. Existing solutions for crowd detection are based on image processing. One approach is to detect motion patterns performed by humans when moving through a crowd. Signal processing techniques are for example used to derive motion patterns from video images.

However, this means that the area of interest has to be continuously served by cameras.

### Summary

It is therefore desirable to detect and characterize crowds without the use of cameras.

The main idea is a method of analysing in a communication network comprising receiving information indicative of a motion of a user equipment, determining at least one parameter indicative of a motion pattern depending on the received information, and determining information indicative of a presence of a group of user equipment depending on the at least one parameter. This way crowds are detected and characterized by using measurements from handset sensors of user equipment like smart phones.

Advantageously information indicative of a position of the user equipment is received and the parameter indicative of the motion pattern is determined depending on the information indicative of the position. This way the crowd can be detected very efficiently.

Further developments of the invention can be derived from the dependent claims and the following description.

### Brief description of the figures

Figure 1     schematically depicts a user equipment.
Figure 2     schematically depicts a server.
Figure 3     schematically depicts a communication network.
Figure 4     schematically depicts an observed area.
Figure 5     schematically depicts an observed area.
Figure 6     schematically depicts part of an observed area.
Figure 7     schematically depicts a flow chart of a method.

### Description of the embodiments

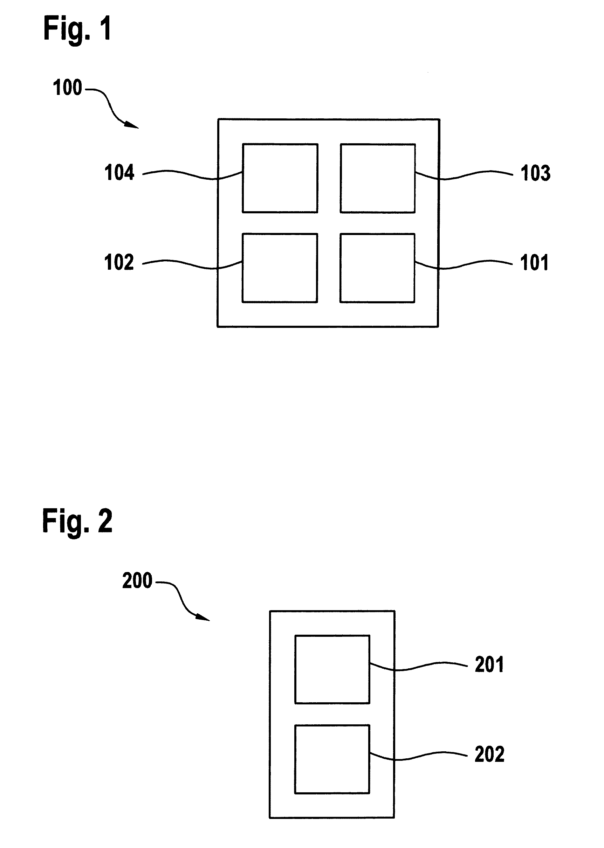

Figure 1 schematically shows a user equipment 100. The user equipment 100 is for example a smartphone or a tablet computing device.

The user equipment 100 comprises an interface 101. Furthermore, the user equipment comprises a sender 103. The interface 101 and the sender 103 are adapted to communicate with other devices, for example using the long term evolution standard well-known as LTE. Instead of this standard any other communication standard may be used as well. For example, the interface 101 and the sender 103 are adapted to communicate according to the IEEE 802.11 standard.

Furthermore, the user equipment 100 comprises a processor 102. The processor is for example adapted to operate using an operating system for smartphones. Such processors are well-known to the person skilled in the art and not further described here in detail. For example an ARM processor is used to run an Android operating system.

Furthermore, the user equipment comprises a sensor 104 adapted to determine information indicative of a motion of the user equipment 100. For example, an accelerometer, a magnetometer, a GPS sensor, a wireless receiver or a combination of these operable to interact with base stations to perform wireless triangulation are used. Similarly a bluetooth-based standard like iBeacon may be used.

The information indicative of the motion of the user equipment is for example the acceleration of the user equipment 100, the velocity or speed at which the user equipment 100 is moving relative to a fixed point on the ground, a position, a direction in which the user equipment 100 is moving relative to this point or a combination of these. This information is in the example provided by the smartphones internal motion sensor, usually an accelerometer, magnetometer or a Gyro-compass. In this case the sensor 104 is adapted accordingly to provide afore mentioned information of the motion of the user equipment 100.

Furthermore the interface 101 may be adapted to receive information indicative of a position or a direction of movement of the user equipment 100 from the sensor 104. This means, that for example the GPS coordinates are received by a GPS sensor of the smartphone. The GPS coordinates are in this case used to determine this information. Alternatively the result of wireless triangulation may be used to determine this information. Wireless triangulation may be performed by the smartphone via interface 101 directly or by the mobile network infrastructure. In the latter case the result of wireless triangulation is provided via the interface 101 to the user equipment 100.

The processor 102 is adapted to determine at least one parameter indicative of a motion pattern pending on the received information. To that end, the interface 101 and the processor 102 interact for example via a data bus not depicted in figure 1 to exchange the required information.

Furthermore, the processor 102 is adapted to determine information indicative of a presence of a group of user equipment depending on the at least one parameter.

According to the example the processor 102 is adapted to detect the presence of a group of user equipment in a certain area depending on the regression model that uses a sinusoidal representation of a lateral oscillation over the time of the longitudinal movement of persons, i.e. of user equipment carried by persons, while they are moving through a area.

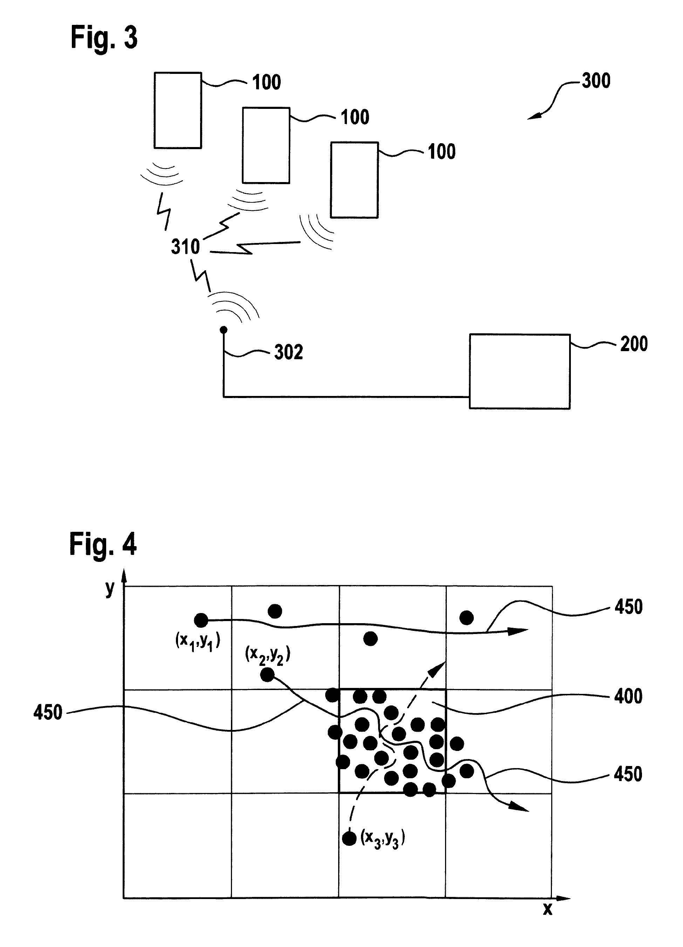

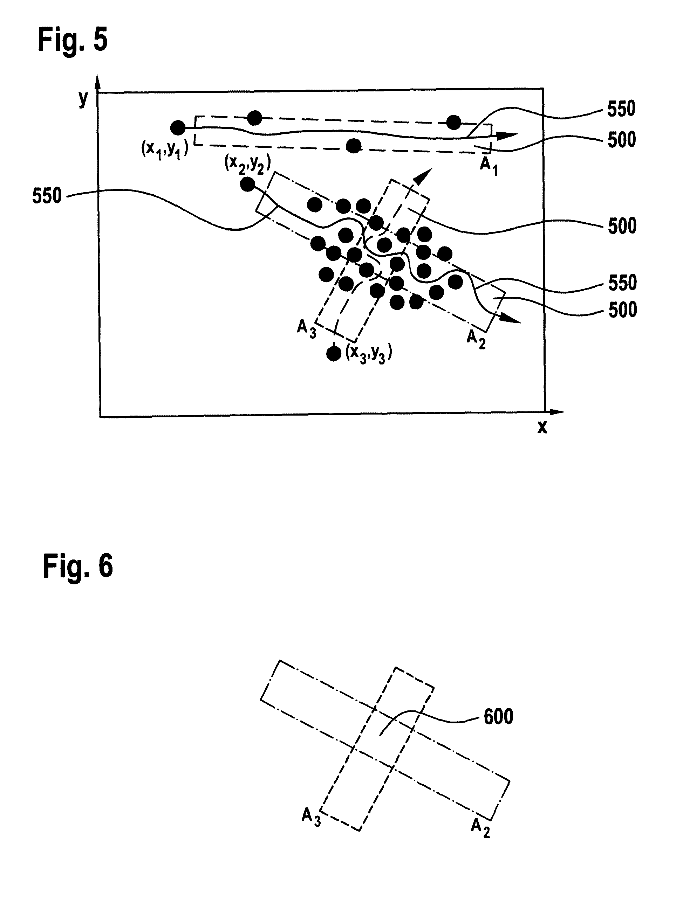

To that end, the processor 102 is adapted to extract parameters of a microscopic motion pattern by a Fast Fourier Transform or a similar transformation. Figures 4 and 5 illustrate such motion patterns as trajectories 450 and 550 for three user equipment 100 respectively.

Characteristic parameters of this function are its lateral amplitude, lateral frequency, longitudinal velocity, and covered longitudinal distance. The lateral amplitude and lateral frequency is extracted from the motion parameters received as information of the motion of the user equipment 100. To that end the processor 102 is adapted to sample the information indicative of the motion of the user equipment for a predetermined time period, for example 10 seconds. The processor 104 may also be adapted to use further information such as location, velocity or a detection accuracy to improve the result of the detection process.

To determine information indicative of a presence of a group of user equipment depending on the at least one parameter, the processor 102 is adapted to perform a function fitting. To that end before the function fitting is performed various samples are collected for lateral amplitude and lateral frequency for the user equipment 100. In the example a linear regression model is used to detect whether a crowd is present or not. For example the crowd is modelled by the functions

$$m(v) = -\alpha * v + \beta$$

$$f(v) = \gamma * v + \delta,$$

describing lateral amplitude and lateral frequency respectively as functions of the velocity v.

Therein $\alpha$, $\beta$, $\gamma$ and $\delta$ are free parameters that are determined by function fitting by the processor 104.

The processor 102 is adapted to interact with a memory not depicted in the figures to compare the values of these parameters to respective threshold values. In the example for the model according to aforementioned functions, if the parameters $\alpha$, $\beta$, $\gamma$, $\delta$ are sufficiently close to the respective values 0.14, 0.21, 0.44 and 0.35 a crowd is detected. The closer the parameter values are to these constants, the more likely is a correct detection of a crowd. This likelihood of correct detection can be characterized as a value, while the decision can be represented by a binary variable c. For example c equal to 0 indicates that no crowd is present, and c = 1 indicates a detected crowd. The processor 102 is adapted to determine the variable c depending on the result of the function fitting. This means that the information indicative of a presence of a group of user equipment 100 is determined by the processor 102 depending on the at least one parameter.

Other function fitting approaches such as a quadratic regression model may be used as well.

Furthermore, the sender 103 is adapted to send the information indicative of the presence of the group of user equipment.

In a first embodiment the user equipment 100 is adapted to perform the function fitting and report the result as information indicative of the presence of the group of users to a server.

According to a second embodiment, the server is adapted to perform the function fitting. In that case the user equipment 100 is adapted to send the information indicative of the motion of the user equipment 100 to the server.

Alternatively the user equipment 100 may be adapted to send the information indicative of the motion pattern to the server as well.

A server according to the first embodiment comprises of a receiver adapted to communicate with the sender 103 of the user equipment 100, for example according to the well-known LTE standard. In that case the server comprises a processor adapted to interact with the interface that receives the information. The processor is adapted to determine a parameter for the communication network depending on the received information, in particular the information indicative of the presence of the group of user equipment 100.

According to the first embodiment the server is adapted to receive information indicative of the presence of the group of user equipment from a plurality of user equipment. In that case the processor on the server is adapted to determine the parameter for the communication network from information received from the plurality of user equipment 100 as well.

A server 200 according to the second embodiment is depicted in figure 2. The server 200 comprises an interface 201 operable to receive information indicative of the motion of the user equipment 100. Furthermore, the server 200 comprises a processor 202 operable to perform aforementioned steps for performing the function fitting.

In particular, the processor 202 is adapted to determine at least one parameter indicative of a motion pattern depending on the received information indicative of a motion of the user equipment 100.

Furthermore, the processor 202 is adapted to determine information indicative of the presence of the group of user equipment depending on the at least one parameter. The same method for function fitting and determining of the parameters are performed in this case by the processor 202 as described above for the processor 102.

In that case, the interface 201 is adapted to receive information indicative of the motion from a plurality of user equipment. Then the processor 202 is adapted to determine whether a crowd is detected or not using the information from a plurality of user equipment.

Figure 4 and figure 5 depict areas that are observed. Such area is for example defined by the coverage of multiple cells of the mobile network. Alternatively a geographic area may be defined.

According to a first example as depicted in figure 4, the area to be observed is discretized into a coarse grid. The grid comprises of quadratic tiles labelled pixel below. The set of all pixel locations refer to as pixel map below. Each pixel has a known geographic coordinate. The crowd parameters therefore can be derived per pixel. The pixel size is for example 10 x 10m.

According to a second example depicted in figure 5 and figure 6 an area 600 is defined as the area in which a bounding box surrounding a trajectory of a user equipment 100 overlaps with another bounding box of another user equipment 100. This overlapping area 600 is depicted in figure 6 for the bounding box A2 and A3. Figure 5 depicts the same bounding box A2 and A3 and another bounding box A1 that does not overlap.

According to this example a trajectory 550 is determined for each of the user equipment 100 within the area observed. The trajectory is for example determined from the motion information received from the user equipment 100. To that end the information about the motion of the user equipment 100 is observed for the predetermined time period and the bounding box is defined as a rectangular area surrounding the trajectory of the user equipment 100 during this period of time. After the user equipment 100 has moved for example for a certain distance a new bounding box is created covering the user's latest trajectory.

In both examples the areas are discretized and the crowd detection is performed after collecting various samples of lateral amplitude m(v) and lateral frequency f(v) for the traversed pixel or latest bounding box.

Afterwards, the statistics of the areas are discretized and the crowd detection is performed for the traversed pixel or latest bounding box.

Afterwards the statistics of the samples are evaluated according to the aforementioned fitting. In the example a regression is performed on a scatter of various data point vm and vf. The data points are depicted as black spots in figure 4 and figure 5 respectively.

For user equipment 100 within arbitrary pixel or bounding boxes these plots allow to fit the resulting point structure to a regression model as described above.

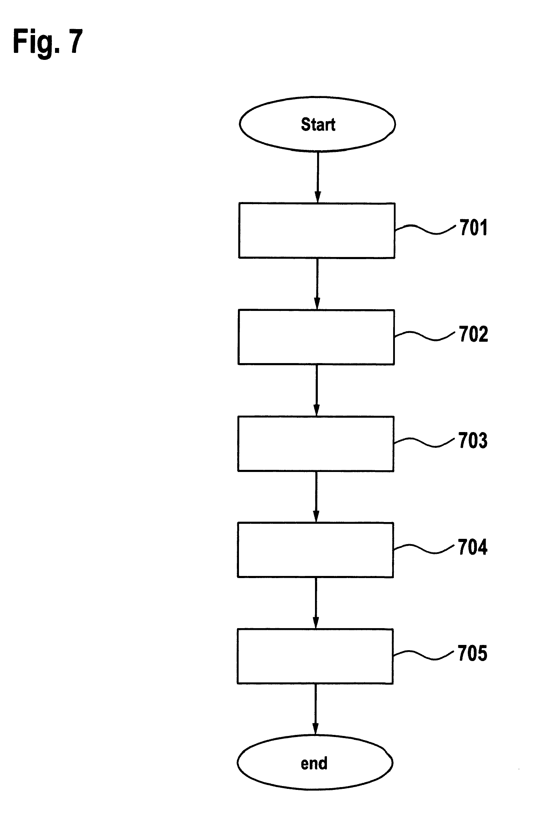

The method for analysing in a communication network is described below referencing figure 7.

The communication network 300 in which the analysis is performed is depicted in figure 3.

According to the example of figure 3 the communication network 300 comprises three user equipment 100, a server 200 and an antenna 302 adapted to communicate with corresponding transmitters, e.g. interface 101 and sender 103, of user equipment 100. For example, a wireless network 310 according to the long term evolution standard is used to communicate in the communication network 300. Any other type of communication standard may be used like the well-known IEEE 802.11 standard.

According to the first embodiment the function fitting is performed on the user equipment 100. This means that in the example each of the user equipment 100 performs the function fitting for the predetermined time period. This approach performs the decision for individual user equipment 100 as soon as the user equipment has traversed a pixel. Afterwards the decisions of multiple user equipment are combined at the server 200 to obtain more accurate crowd detection. One simple method for combining is to compute the weighted sum over J users for each arbitrary pixel j

$$D_i = 1/J \ \Sigma_j{}^J{}_{=1} \ p_{ij}c_{ij}.$$

The weighted sum forms an average over the decision of the individual user equipment 100 weighted by a predicted accuracy p. The predicted accuracy p for a number of user equipment 100 is for example determined for each arbitrary pixel. This predicted accuracy p is for example determined as likelihood of correct detection depending on how close the parameter values of $\alpha$, $\beta$, $\gamma$, $\delta$ are to the respective values 0.14, 0.21, 0.44 and 0.35.

In this example for each user equipment 100 the decision is saved along with its respective coordinates.

In a crowded area it is very likely that the bounding boxes of multiple users will overlap. Consequently, overlapping the individual decision points of similar uses equipment 100 will increase the accuracy of the crowd detection.

According to the second example the function fitting is performed on the server 200. In this approach a decision is made after data from multiple users, i.e. multiple user equipment 100, are combined. For example the fitting to obtain the aforementioned functions can be performed on the data of multiple user equipment 100 at once. For a pixel map this allows to include input from all users within each decision per pixel. When bounding boxes are used data of all users within an area of two or more overlapping bounding boxes can be jointly processed.

The method of analysing information in the communication network 300 for example starts when a communication regarding information indicative of motion of the user equipment 100 is started. This means in the first example that the sensor 104 pushes the information to the interface 101. Likewise in the second embodiment this means that a communication request regarding the information indicative of the motion of the user equipment 100 is received at the interface 201 of the server 200.

In any case, after the start a step 701 is executed.

In step 701 the information indicative of the motion of the user equipment 100 is received. In the first embodiment the acceleration, velocity and/or direction is received from the smartphone's internal motion sensor.

According to the second embodiment information indicative of the motion from a plurality of user equipment 100 is received.

Afterwards the step 702 is executed.

In step 702 information indicative of a position of the user equipment 100 is received. The position of the user equipment 100 is for example received as a pair of variables x and y indicating latitude x and longitude y respectively. This latitude x and longitude y is depicted as $x_1$, $y_1$ ; $x_2$, $y_2$ ; $x_3$, $y_3$ in figures 4 and 5 for the three user equipment 100 of the communication network 300.

Any type of coordinates may be used to define the position of the user equipment. Preferably Cartesian coordinates are used to define the area that is observed and to define the position of the respective user equipment 100 in the area.

Afterwards the step 703 is executed.

In step 703 at least one parameter indicative of the motion pattern is determined depending on the received information. In the example free parameters $\alpha$, $\beta$, $\gamma$, $\delta$ are determined by function fitting as described above.

Furthermore, the position of the user equipment 100 may be used to determine these parameters as described as well.

Afterwards a step 704 is executed.

In step 704 the information indicative of the presence of the group of user equipment is determined depending on the at least one parameter. In the example the binary variable c is determined to 0 indicating that no crowd is present when the free parameters $\alpha$, $\beta$, $\gamma$, $\delta$ are not sufficiently close to the respective values of the 0.14, 0.21, 0.44, and 0.35. Likewise the binary variable c is determined to 1, indicating that the crowd is present in case the parameters are sufficiently close to these values. The tolerance for the free parameters $\alpha$, $\beta$, $\gamma$, $\delta$ is for example 0.01. This means that any of free parameters $\alpha$, $\beta$, $\gamma$, $\delta$ is considered sufficiently close to the respective value when it is determined within the range of +/- 0.01 of the values 0.14, 0.21, 0.44 and 0.35 respectively. To that end corresponding thresholds are determined for each free parameter $\alpha$, $\beta$, $\gamma$, $\delta$ and the respective parameter is compared to the respective threshold.

Afterwards a step 705 is executed.

In step 705 a parameter for example a load balancing parameter, a multi casting parameter, an admission control parameter or a parameter to switch on or off a small cell of the communication network 300 is determined depending on the information indicative of the presence of the group of user equipment.

For example for load balancing or scheduling the detection of a crowd reveals the cause of a network overload or interference within a certain area. In that case, depending on the fact that a crowd is detected for example a fairness parameter of a scheduler may be adapted relative to the crowd density in a certain area.

For multicasting after detection of a crowd the date may be further processed to characterize its size and density in various parts of the area observed. This information may be used for a decision whether multicast protocols or unicast protocols should be used. To that end an operating point may be switched between unicast and multicast depending on the information indicative of the presence of the group of user equipment. This means that the binary value c equal to 1 switches to operating point to multicast while the binary value of 0 switches to operating point to unicast.

For admission control or congestion avoidance network resources may be reserved or allocated depending on the information about the presence of a group of user equipment. This means that when a binary value c equal to 1 indicates that a crowd has been detected in an area additional network resources are allocated for that area.

Furthermore, small cells may be activated or deactivated in certain areas depending on a value of the binary value c. For example, for the binary value c=1 additional small cells are switched on. Likewise, when the binary value c=0 indicates that no crowd has been detected, a small cell can be switched off.

In an optional step, not depicted in figure 7, information about the result of the detection may be sent to additional servers. For example, emergency response, authorities may be provided with information about the detection of a crowd to avoid disasters related to mass panic at public events. Likewise, services may be provided by indicating for example the appearance of a crowd at a certain location to business owners or advertising companies.

Afterwards the method ends.

Alternatively, the method may be repeated for consecutive time periods of fixed size to collect further measurements and to process the information as described above.

Accordingly, the method may comprise sampling the information indicative of the motion of the user equipment 100 in the predetermined time period several times. Likewise, sampling of the information indicative of the motion of the user equipment 100 may be performed in the predetermined area 400 or 600. In any case, the crowds are detected this way early and reliably. Theoretically, information collected from one user equipment 100, e.g. the handset of a single user, is already enough to give a good prediction of crowd information. Repeating the process improves the accuracy.

Depending on the available information the aforementioned method may be modified according to one of four combinations resulting from different decision approaches and area representations.

In one combination the decision whether a crowd is detected or not, is based on one predetermined set of thresholds for the free parameters $\alpha$, $\beta$, $\gamma$, $\delta$ per user equipment 100 per pixel. In another combination data of a plurality of user equipment 100 is first processed for example to an average value. Then the decision on whether a crowd is detected or not is derived per pixel. In another embodiment the decision is reached per user equipment 100 for a time slot using one set of thresholds for the free parameters $\alpha$, $\beta$, $\gamma$, $\delta$. In this embodiment the time slot may be replaced by a trigger by a user. This means that rather than using a predetermined synchronized time slot the user may trigger the decision for example by actuating the method when entering the area observed. In another embodiment trajectories may be used to find overlapping areas of the bounding boxes and the data is combined for the detected overlapping areas. Then the decision is based on the data combined for the area using the set of thresholds for the free parameters $\alpha$, $\beta$, $\gamma$, $\delta$.

In any case, the detection process is slotted, where a slot represents a time window of fixed size within which measurements are collected and processed. After crowd parameters are extracted for the current slots, the process may repeat.

**Claims**

1. A method of analysing information in a communication network (300), **comprising** receiving (701) information indicative of a motion of a user equipment (100), determining (703) at least one parameter indicative of a motion pattern depending on the received information, and determining (704) information indicative of a presence of a group of user equipment depending on the at least one parameter.

2. The method according to claim 1, comprising receiving (702) information indicative of a position of the user equipment (100), wherein the parameter indicative of the motion pattern is determined (703) depending on the information indicative of the position.

3. The method according to any of the aforementioned claims, comprising receiving (701) information indicative of the motion from a plurality of user equipment.

4. The method according to claim 1 or 2, comprising receiving information indicative of the presence of the group of user equipment from a plurality of user equipment.

5. The method according to any of the aforementioned claims, comprising determining (704) the information indicative of the presence of the group of user equipment by comparing the at least one parameter to a predetermined threshold.

6. The method according to any of the aforementioned claims, comprising sampling the information indicative of the motion of the user equipment in a predetermined time period.

7. The method according to any of the aforementioned claims, comprising sampling the information indicative of the motion of the user equipment (100) in a predetermined area (400, 600).

8. The method according to claim 7, comprising determining the area (400) depending on the information indicative of the position of the user equipment (100).

9. The method according to claim 8, comprising determining the area (500) depending on the information indicative of the motion of the user equipment (100).

10. The method according to claim 9, comprising determining a trajectory (550) for the user equipment (100), and determining the area (500) depending on the trajectory (550).

11. The method according to any of the aforementioned claims, comprising determining (705) a parameter for the communication network (300) depending on the information (c) indicative of the presence of the group of user equipment.

12. A user equipment (100) for analysing information in a communication network (300), **comprising** an interface (101) operable to receive information indicative of a motion of user equipment (100), and a processor (102) adapted to determine at least one parameter indicative of a motion pattern depending on the received information, and to determine information indicative of a presence of a group of user equipment depending on the at least one parameter.

**13.** The user equipment (100) according to claim 12, wherein the interface (101) is adapted to receive information indicative of a position of user equipment (100), and wherein the processor (102) is adapted to determine the parameter indicative of the motion pattern depending on the information indicative of the position.

**14.** The user equipment (100) according to claim 12 or 13, comprising a sender (103) adapted to send the information indicative of the presence of the group of user equipment.

**15.** A server (200) for analysing information in a communication network (300), **comprising** an interface (201) operable to receive information indicative of a motion of a user equipment (100), and a processor (202) adapted to determine at least one parameter indicative of a motion pattern depending on the received information, and to determine information indicative of a presence of a group of user equipment depending on the at least one parameter.

**16.** The server (200) according to claim 15, wherein the interface (201) is adapted to receive information indicative of a position of the user equipment (100), and wherein the processor (202) is adapted to determine the parameter indicative of the motion pattern depending on the information indicative of the position.

**17.** The server (200) according to claim 15 or 16, wherein the interface (201) is adapted to receive information indicative of the presence of the group of user equipment.

**Fig. 1**

100

104

102

103

101

**Fig. 2**

200

201

202

## Fig. 3

## Fig. 4

# Fig. 5

# Fig. 6

# Fig. 7

```
        ┌─────────┐
        │  Start  │
        └─────────┘
             │
             ▼
        ┌─────────────┐
        │             │ ～ 701
        └─────────────┘
             │
             ▼
        ┌─────────────┐
        │             │ ～ 702
        └─────────────┘
             │
             ▼
        ┌─────────────┐
        │             │ ～ 703
        └─────────────┘
             │
             ▼
        ┌─────────────┐
        │             │ ～ 704
        └─────────────┘
             │
             ▼
        ┌─────────────┐
        │             │ ～ 705
        └─────────────┘
             │
             ▼
        ┌─────────┐
        │   end   │
        └─────────┘
```

Europäisches
Patentamt

European
Patent Office

Office européen
des brevets

**EUROPEAN SEARCH REPORT**

Application Number

EP 14 29 0251

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/059608 A1 (CUFF MICHAEL A [US] ET AL) 7 March 2013 (2013-03-07) * abstract * * paragraphs [0006] - [0011], [0020] - [0026], [0033] - [0036], [0042], [0043], [0046], [0050], [0051], [0057] - [0060], [0070], [0076]; claim 4 * ----- | 1-17 | INV. H04W64/00 H04W4/02 ADD. H04W36/22 H04W24/08 |
| X | US 2014/184795 A1 (MILLER GRANT D [US] ET AL) 3 July 2014 (2014-07-03) | 1-4, 6-10, 12-17 | |
| A | * abstract * * paragraphs [0005], [0028], [0053] - [0055], [0069] - [0073], [0080] - [0082]; claims 13,17,18 * ----- | 11 | |
| X | US 2012/108261 A1 (MIYAKE MOTOHARU [US] ET AL) 3 May 2012 (2012-05-03) | 1-4, 6-10, 12-17 | |
| A | * abstract * * paragraphs [0002] - [0010], [0012], [0023] - [0026], [0036], [0040], [0043] - [0046], [0053], [0063]; claim 1 * ----- | 5,11 | TECHNICAL FIELDS SEARCHED (IPC) H04W |
| X | US 2011/295577 A1 (RAMACHANDRAN JAYARAMAN [US]) 1 December 2011 (2011-12-01) | 1-4,6-9, 11-17 | |
| A | * abstract * * paragraphs [0001], [0002], [0013], [0014], [0020], [0030], [0033], [0050], [0053] - [0055], [0064], [0074] - [0078]; claims 1,2,6 * ----- | 5,10 | |

-/--

The present search report has been drawn up for all claims

| Place of search | Date of completion of the search | Examiner |
|---|---|---|
| Berlin | 18 March 2015 | Alonso Maleta, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

# EUROPEAN SEARCH REPORT

Application Number

EP 14 29 0251

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2014/044323 A1 (ERICSSON TELEFON AB L M [SE]) 27 March 2014 (2014-03-27)<br>* abstract *<br>* page 1, line 3 - page 2, line 31 *<br>* page 4, lines 5-32 *<br>* page 5, line 22 - page 7, line 11 *<br>* page 12, line 6 - page 13, line 34 *<br>* page 16, line 4 - page 17, line 6 *<br>----- | 1-17 | |
| A | US 2014/149094 A1 (TAKEUCHI YUICHIRO [JP]) 29 May 2014 (2014-05-29)<br>* abstract *<br>* paragraphs [0003], [0006] - [0009], [0049], [0073] - [0080], [0092] - [0098], [0118], [0124] *<br>----- | 1-17 | |

TECHNICAL FIELDS
SEARCHED      (IPC)

The present search report has been drawn up for all claims

| Place of search | Date of completion of the search | Examiner |
|---|---|---|
| Berlin | 18 March 2015 | Alonso Maleta, J |

EPO FORM 1503 03.82 (P04C01)

## ANNEX TO THE EUROPEAN SEARCH REPORT
## ON EUROPEAN PATENT APPLICATION NO.

EP 14 29 0251

18-03-2015

| Patent document cited in search report | | Publication date | Patent family member(s) | | Publication date |
|---|---|---|---|---|---|
| US 2013059608 | A1 | 07-03-2013 | US | 2013059608 A1 | 07-03-2013 |
| | | | US | 2014155105 A1 | 05-06-2014 |
| | | | WO | 2013032523 A1 | 07-03-2013 |
| US 2014184795 | A1 | 03-07-2014 | US | 2014184795 A1 | 03-07-2014 |
| | | | US | 2014189096 A1 | 03-07-2014 |
| US 2012108261 | A1 | 03-05-2012 | JP | 2012142916 A | 26-07-2012 |
| | | | US | 2012108261 A1 | 03-05-2012 |
| US 2011295577 | A1 | 01-12-2011 | US | 2011295577 A1 | 01-12-2011 |
| | | | US | 2013226543 A1 | 29-08-2013 |
| WO 2014044323 | A1 | 27-03-2014 | NONE | | |
| US 2014149094 | A1 | 29-05-2014 | CN | 103839290 A | 04-06-2014 |
| | | | JP | 2014106585 A | 09-06-2014 |
| | | | US | 2014149094 A1 | 29-05-2014 |

EPO FORM P0459

For more details about this annex : see Official Journal of the European Patent Office, No. 12/82